Europäisches Patentamt

(19) European Patent Office

Office européen des brevets

(11) Publication number: **0 180 696**
**B1**

(12) **EUROPEAN PATENT SPECIFICATION**

(45) Date of publication of patent specification: **30.03.88**

(21) Application number: **84850343.9**

(22) Date of filing: **06.11.84**

(51) Int. Cl.⁴: **D 01 G 15/72, B 65 G 53/60,**
**B 07 B 9/00, B 07 B 7/06,**
**B 03 B 9/06, B 07 B 11/04,**
**D 21 B 1/02, D 01 G 11/00**

(54) Apparatus for the separation of waste.

(43) Date of publication of application:
**14.05.86 Bulletin 86/20**

(45) Publication of the grant of the patent:
**30.03.88 Bulletin 88/13**

(84) Designated Contracting States:
**AT BE CH DE FR GB IT LI LU NL**

(56) References cited:
**EP-A-0 091 982**
**DE-B-1 164 321**
**FR-A-2 283 076**
**GB-A-2 091 671**
**US-A-3 039 150**
**US-A-4 268 294**
**US-A-4 305 507**

(73) Proprietor: **Mo och Domsjö Aktiebolag**
**S-891 91 Örnsköldsvik (SE)**

(72) Inventor: **Holmström, Sten**
**Martinvägen 46**
**S-161 55 Bromma (SE)**

(74) Representative: **Omming, Allan**
**A. OMMING & CO. AB Sveavägen 28-30**
**S-111 34 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to apparatus for separating fluff from encasing layer material in waste obtained in the manufacture of liquid absorbent products, such as diapers, sanitary towels or napkins, and underlays, comprising a liquid-absorbent pad of fluffed cellulose pulp, fluff, which is fully or partially encased in an outer layer of tissue, non-woven material and/or plastic film, in which apparatus the waste is disintegrated and introduced in the form of a material suspension tangentially into a separator comprising a cylindrical housing having an upper inlet and a first and a second outlet for fluff and layer material respectively; a perforated separation drum which is connected to the upper inlet and the second lower outlet and which between its outer wall and the inner wall of the housing forms an annular space connected to the first lower outlet and to fan means connected to the first and the second outlet.

When manufacturing products of the aforesaid kind, a layer of fluffed cellulose pulp is placed on a continuous web of, for example, non-woven material, and a further layer comprising, for example, plastics foil is placed over the liquid absorbent pad formed by the layer of fluff. The two outer layers are joined together along their longitudinally extending edges with the aid of a binder or by some other suitable means, and the resultant elongated body is divided up into smaller bodies of desired lengths, by means of transverse seals. When a machine is started up, a certain amount of fluff and layer material must be considered to constitute waste; waste is also obtained, for example, from the tailing-end of layer material on a reel which is almost empty. In fully normal production conditions, a wastage of about 10—12% can be expected. Hitherto it has not been possible to recover this waste material for useful purposes in an economically viable manner, and consequently the waste has been burned instead.

It is self-evident that waste of such quantities represents a considerable loss, and consequently it is desirable to be able to recover at least the valuable fluff from said waste material. The presence of plastics foil or cellulose foil impregnated with plastic and glue means that it is not possible, or permissible, to mix the waste with the starting material, subsequent to disintegrating the waste into pieces of suitable size. In addition, a layer material is often colored, and when passing through a beating process may result in the coloration of a non-colored material.

Known apparatus of the aforedescribed kind have been used for separating fine particulate material from coarse material, the particles being of relatively high density. If such a separating apparatus is used to separate fluff fibre from, for example, pieces of plastic foil it will be found that the pieces of plastic will be drawn firmly by suction onto the inner surface of the drum, unless there is created a precise pressure difference between the interior of the drum and the exterior thereof with respect to the flow rate of the suspension, so as to ensure that the fibres which are substantially aligned in the direction of the airflow pass out through holes in the drum, while the heavier particles, the pieces of plastic foil, are maintained at a speed sufficient to prevent the particles from being sucked firmly over the holes.

Consequently, an object of the invention is to provide apparatus of the kind mentioned which will enable the speed at which the material flows to be effectively controlled in a simple fashion, and therewith enables the plant to be set-up for optimal recovery of valuable fibres.

This object is fully realized by means of the invention as defined in the claims and described hereinafter with reference to a preferred embodiment thereof illustrated in the accompanying drawings, in which

Figure 1 is a greatly simplified side view of a separation plant incorporating apparatus according to the invention;

Figure 2 is a top plan view in larger scale of the three separators and the waste infeeder illustrated in Figure 1; and

Figure 3 is a side view of a separator illustrated in Figures 1 and 2.

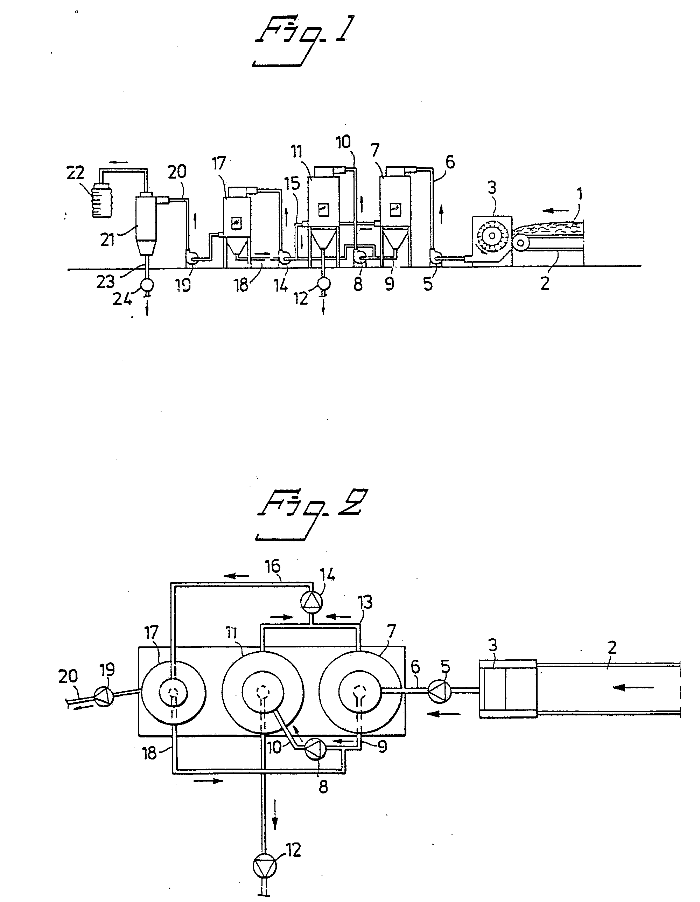

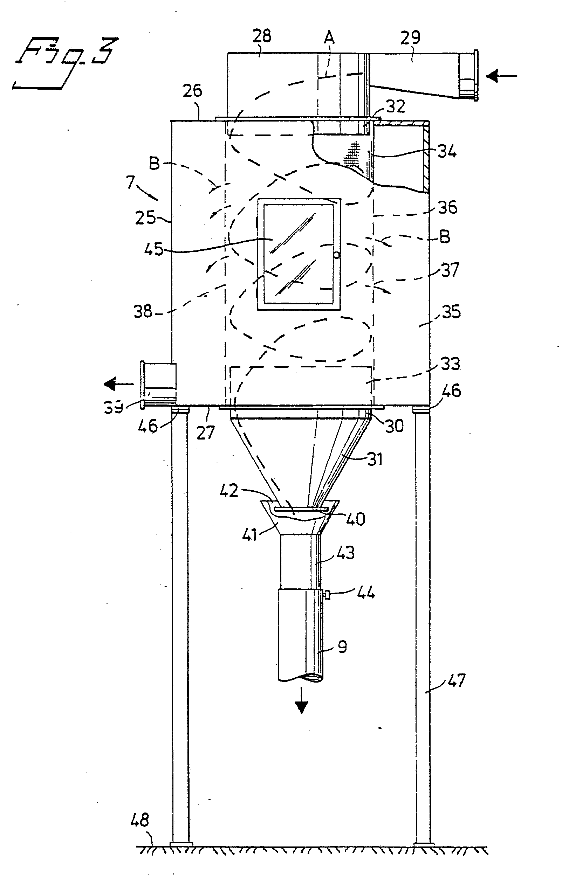

As illustrated in Figure 1, waste material 1 of the aforementioned kind is fed by means of a belt conveyor 2 to a shredder or hammer mill or comparable disintegrating apparatus 3. Plastic foil or cellulose foil is disintegrated in the apparatus 3 into pieces from which fluff enclosed between the foils can be removed therefrom. For reasons which will become apparent hereinafter it is desirable to disintegrate the foils to the least possible extent, so as to enable the fluff to be removed therefrom in the quickest possible manner. The disintegrated, or at least opened waste products, such as sanitary towels or napkins, diapers, underlays etc. are fed from the disintegrator 3 by means of a pneumatic conveyor, incorporating a suction fan 5 and a conveyor line 6, to the upper end of a first separator 7, which separates the pieces of foil from the fluff in a first stage. The pieces of foil depart at the lower end of the separator 7 and are drawn by means of a suction fan 8, via a line 9, 10 (see in particular Figure 2) to the upper end of a second separator 11. The pieces of foil and any fluff adhering thereto are subjected to further treatment in this separator 11. The waste foil departs at the lower end of the separator 11 and is carried away by means of a pneumatic conveyor incorporating a suction fan 12. As will best be seen from Figure 2, the separated fluff is discharged from the separator 7 via a line 13 connected to the suction side of a suction fan 14. The fluff separated in the separator 11 is fed, via a line 15, to the suction side of the aforesaid suction fan 14, and similarly to the fluff from the separator 7 is fed, via a conveyor line 16, to a third separator 17. The ingoing fluff material may contain minor pieces of foil, and it is for this reason that the exemplifying embodiment of the plant also incorporates a third separator. Foil waste is optionally fed to the suction side of the suction fan 8 and is processed in the second separator 11 in order to remove any fluff adhering to the foil pieces, whereafter the foil waste is discharged through a line connected to the suction fan 12. The totally pure fluff discharged from the separator is fed, via a suction fan 19 in a conveyor line, to a cyclone 21 in the illustrated embodiment, and conveying air departs via a dust filter 22, and the fluff is taken out, for example through a line 23 and a suction fan 24, for further use.

When mention is made in the aforegoing to the infeed of material to a separator, it is always intended that the material is fed into a perforated separating drum, that the foil waste departs from said separating drum, and that the fluff is discharged from an annular space formed between the separation drum and a cylindrical housing extending therearound.

A separator according to the invention will now be described with reference to Figure 3. The separator illustrated in Figure 3 is assumed to be the aforedescribed separator 7. If additional separators are considered necessary, for example the aforedescribed separators 11 and 17, the description of the separator 7 also applies to these additional separators, with the exception that, as hereinafter described, the separation drums may be mutually different. The separator 7 of the Figure 3 embodiment is provided with a vertically extending, cylindrical and at least substantially gas-tight housing 25 having an upper side 26 and a bottom 27. Arranged centrally in the upper side 26 is a circular opening to which there is sealingly connected a cylindrical, gas-tight head box 28 having an inlet stub 29 which is intended to be connected to the line 6 in Figures 1 and 2. A circular opening which is co-axial with the aforesaid opening and preferably equally as large as said opening is arranged in the bottom 27, and connected to this opening is a discharge box comprising an upper cylindrical part 30 and a conical discharge part connecting therewith. The mutually opposite end parts of the cylindrical head box 28 and the cylindrical part 30 project somewhat into the housing 25 and form flanges 32 and 33 respectively. These two flanges 32 and 33 are encircled by and form supports for an open-ended cylindrical, perforated separation drum 34. The separation drum is thus connected to the inlet and to the outlet. Thus, there is formed between the inner wall of the cylindrical housing 25 and the outer cylindrical surface of the separation drum 34 an annular space 35, which communicates with the interior of the separation drum 34 through perforations, such as holes 36, 37 and 38.

The annular space 35 communicates with an outlet 39 for separated fluff at the bottom 27. In the embodiment illustrated in Figures 1 and 2 the outlet 39 is coupled to the pneumatic conveyor line 13, and the outlet from the separation drum is coupled to the line 9 (see also Figures 1 and 2). As will be seen from Figure 3, the line 9 is not directly

and sealingly connected to the outlet opening of the outlet cone 31, but to an upwardly open conical funnel 41, whose open wider end surrounds the opening 40, so as to form an annular air-intake gap 42 through which air can eb drawn from the surroundings by means of the suction fan 8. In order to enable the area of the gap 42 to be adjusted, i.e. to alter the distance between the mutually facing wall surfaces of the cone 31 and 41, the cone 41 of the illustrated embodiment is supported by a tube 43 which is telescopically and sealingly inserted into the tubular line 9 and held in its adjusted position by means of latching means 44.

The housing 25 is provided with an openable inspection window 45. The bottom 27 is provided with support shoulders or the like 46, by means of which the housing 25 can be attached to a frame 47, made of angle iron for example, mounted on a floor surface 48.

The described separator 7 operates in the following manner. The inlet 29, to which there is supplied a stream of air containing waste material, is arranged to direct the stream of material tangentially into the head box 28. A stream of air is maintained towards the outlet 39 and 40 by means of the suction fans 8 and 14, and the stream of material, which is indicated in Figure 3 by the broken line A, is caused to move helically and downwardly along the inner wall of the separation drum 34. During movement of the material stream A along the wall of the drum 34, towards the outlet 40, material of small particle size, i.e. fluff, as a result of the lower air pressure prevailing in the annular space 35 will be drawn out through the holes in the separation drum by friction and, as indicated by the arrows B, into the space 35 and are drawn therefrom by suction out through the fluff outlet 39. The material of larger particle size, i.e. pieces of paper, pieces of plastic foil etc., will not be drawn out through the openings 36, 37, 38, partly because of their larger size and partly because it has been ensured when disintegrating the waste material in the shredder 3 that the presence of excessively small pieces of paper or plastic foil is avoided. These larger pieces of waste depart through the line 9. The pitch of the helical material stream A, and therewith the stay time of the material in the separator, can be regulated within wide limits, by adjusting the width of the gap 42. When a wide gap is used, the major part of the air is drawn from the surroundings to the line 9, and the downwardly directed air stream in the separator becomes relatively weak, causing the aforesaid pitch to be small, and in extreme cases zero, i.e. the infeed waste is not moved axially downwards, but remains stationary in the separation drum.

In order to separate the fluff from the foil waste in the best possible manner, the pressure in the annular space 35 is regulated in relation to the pressure in the interior of the separation drum so as to ensure that the oil pieces are sucked through the perforated drum to the least possible extent, while ensuring at the same time that the desired through-flow of material is obtained. As beforementioned, the flow of air through the outlet 40 can be controlled within wide limits, for example by means of the described arrangement 31, 41, this control also implying a change in the air flow through the perforated wall of the separation drum, i.e. the transportation of fluff away therefrom. In certain cases, it may be suitable to control separately the flow through the outlet 39, which can be effected, for example, by changing the capacity of the suction fan 14, by arranging a throttle valve in the line 13, or by introducing ambient air, as described with reference to the outlet 40.

The separation drum 34 may comprise an open-mesh cylinder having, for example, square apertures with side lengths of 10—25 mm, or may comprise, as is preferred, a metal drum, for example a stainless steel drum having extremely smooth interior surfaces and provided with closely lying holes. This latter type of drum offers less friction to the material stream A and the risk of fluff fastening in the holes is very small. The described separator can be modified in many ways without departing from the concept of the invention. For example, the air inlet gap 42 may be replaced with a regulator throttle valve, and this gap can, in turn, be replaced with an air inlet opening. The separators may also lie horizontally or with their axes inclined to the vertical plane or to the horizontal plane respectively.

A particularly effective result was obtained when carrying out practical tests with a separator comprising a housing 25 having a diameter of 900 mm and a height of 1000 mm and a separation drum 34 made of wire mesh having mesh sizes of $20 \times 20$ mm and an axial effective length of about 850 mm, with a fluff recovery of 90—95% calculated on the weight of the fluff in the waste material. The waste material was fed to the separator in an air stream containing 10% by weight solid material at a speed of about 20 m/s and a volume of about 2500 m³/h. The fluff obtained from a single separator contained negligible quantities of foil pieces and a fluff material which was totally free from such foil pieces was obtained in the aforedescribed plant comprising three separators, of which the last separator had a drum of mesh size $23 \times 12$ mm.

## Claims

1. Apparatus for separating fluff from encasing layer material in waste obtained in the manufacture of liquid absorbent products, such as diapers, sanitary towels or napkins, and underlays, comprising a liquid absorbent pad or fluffed cellulose pulp, fluff, which is fully or partially encased in an outer layer of tissue, non-woven material and/or plastic foil, in which apparatus the waste is disintegrated and in the form of a material suspension is introduced tangentially into a separator (7, 11, 17), comprising a cylindrical housing (25) having an upper inlet (28) and a first and a second lower outlet (39, 40) for fluff and layer material respectively; a perforated separation drum (34) which is connected to the upper inlet and the second lower outlet (40) and which between its outer wall and the inner wall of said housing defines an annular space (35) connected to the first lower outlet (39) and to fan means (14, 8) connected to the first and the second outlet, characterized in that the second outlet (40) is connected to its suction fan means (8) via a regulatable air-intake opening (42) for drawing ambient air to the fan means (8) by suction.

2. Apparatus according to Claim 1, characterized in that the regulatable air-intake opening comprises a variable annular gap (42) arranged around said second outlet (40).

## Patentansprüche

1. Vorrichtung zum Abscheiden flockigen Materials von Umhüllungslagenmaterial bei Abfällen, die bei der Herstellung flüssigkeitsabsorbierender Produkte, wie Damen- oder Monatsbinden, Windeln und Unterlagen, angefallen sind und eine flüssigkeitsabsorbierende Flockenschicht aus geflockter Cellulosefasermasse umfassen, die vollständig oder teilweise von einer äußeren Lage eines Gewebes, eines Vliesmaterials und/oder einer Kunststoffolie eingehüllt ist, wobei die Abfälle in der Vorrichtung zerkleinert und in Form eines Materialschwebestroms tangential in einen Abscheider (7, 11, 17) mit einem zylindrischen Gehäuse (25) eingeführt werden, das einen oberen Einlaß (28) sowie einen ersten und einen zweiten Auslaß (39, 40) für flockiges bzw. Lagenmaterial aufweist, und wobei eine gelochte Abscheidetrommel (34) mit dem oberen Einlaß und dem zweiten unteren Auslaß (40) verbunden ist, die zwischen ihrer Außenwand und der Innenwand des Gehäuses einen Ringraum (35) bildet, der mit dem ersten unteren Auslaß (39) und einer mit dem ersten und dem zweiten Auslaß verbundenen Gebläseeinrichtung (14, 8) verbunden ist, dadurch gekennzeichnet, daß der zweite Auslaß (40) mit seiner Sauggebläseeinrichtung (8) über eine regulierbare Lufteinlaßöffnung (42) zum Einspeisen von Umgebungsluft zur Gebläseeinrichtung (8) mittels Saugwirkung verbunden ist.

2. Vorrichtung nach Anspruch 1, dadurch gekennzeichnet, daß die regulierbare Lufteinlaßöffnung einen um den zweiten Auslaß (40) herum angeordneten veränderbaren Ringspalt (42) aufweist.

## Revendications

1. Dispositif de séparation des peluches de la couche de matériau qui les entoure dans des déchets obtenus au cours de la fabrication de produits absorbant des liquides, tels que des couches, des serviettes et des bandes hygiéniques ainsi que des alèzes, comprenant un matelas absorbant les liquides en pulpe de cellulose absorbante, pelucheuse, qui est complètement ou partiellement entouré d'une couche extérieure de tissu, de matériau non-tissé et/ou de matière plastique en feuille, dans lequel dispositif les déchets sont désintégrés et introduits sous la forme d'une suspension de matières tangentiellement dans un séparateur (7, 11, 17) comprenant un boîtier cylindrique (25) avec une entrée supérieure (28) et une première ainsi qu'une seconde sorties inférieures (39, 40) respectivement pour les peluches et le matériau en feuille; un tambour de séparation perforé (34) qui est relié à l'entrée supérieure et à la seconde sortie inférieure (40) et qui , entre sa paroi extérieure et la paroi intérieure dudit boîtier délimite un espace annulaire (35) relié à la première sortie inférieure (39) et à des moyens de ventilateur (14, 8) reliés à la première et à la seconde sorties, caractérisé par le fait que la seconde sortie (40) est reliée à son moyen de ventilateur d'aspiration (8) par une ouverture d'entrée d'air réglable (42) afin d'entrainer de l'air ambient jusqu'au moyen de ventilation (8) par aspiration.

2. Appareil selon la revendication 1, caractérisé par le fait que l'ouverture réglable d'entrée d'air comprend un espace annulaire variable (42) agencé autour de ladite seconde sortie (40).

Fig. 1

Fig. 2

Fig.3